# EUROPÄISCHE PATENTSCHRIFT

(11) **EP 1 067 399 B1**
(45) Veröffentlichungstag und Bekanntmachung des Hinweises auf die Patenterteilung: **02.11.2006**
(21) Anmeldenummer: 00113373.5
(22) Anmeldetag: 23.06.2000
(51) Int. Cl.: G01S 17/95, G01S 13/95, G01N 21/53

(54) **Verfahren zur Sichtweitenbestimmung**
Method of visibility determination
Procédé de détermination de la visibilité

(30) Priorität: 24.06.1999 DE 19928915
(43) Veröffentlichungstag der Anmeldung: 10.01.2001
(73) Patentinhaber: ROBERT BOSCH GMBH, 70442 Stuttgart (DE)
(72) Erfinder: Poechmüller, Werner, 31139 Hildesheim (DE)

(56) Entgegenhaltungen:
- EP-A- 0 691 534
- DE-A- 3 801 368
- DE-A- 3 912 353
- DE-C- 3 810 840
- POMERLEAU D: "Visibility estimation from a moving vehicle using the RALPH vision system" INTELLIGENT TRANSPORTATION SYSTEM, 1997. ITSC '97., IEEE CONFERENCE ON BOSTON, MA, USA 9-12 NOV. 1997, NEW YORK, NY, USA,IEEE, US, 9. November 1997 (1997-11-09), Seiten 906-911, XP010270909 ISBN: 0-7803-4269-0

## Beschreibung

### Stand der Technik

Die vorliegende Erfindung betrifft ein Verfahren zur Bestimmung der Sichtweite in dem vor einem Fahrzeug liegenden Blickfeld, wobei videotechnisch eine Kontrastmessung an mindestens einem sich im Blickfeld befindenden Objekt durchgeführt wird.

In der DE 195 30 289 A1 sind mehrere Verfahren zur Sichtweitenbestimmung erwähnt, die auf Kontrast-, Absorptions- und Reflexionsmessungen basieren. Die Druckschrift führt aus, daß Kontrastmessungen zur Sichtweitenbestimmung videotechnisch ausgeführt werden können, diese aber für einen mobilen Einsatz in Fahrzeugen nicht geeignet sei. Stattdessen wird vorgeschlagen, für die Sichtweitenmessung das Reflexionsprinzip zu nutzen, das auf der Rückstreuung von ausgesendetem Licht an die Sicht des Fahrers behindernden, z.B. nebelbildenden Wassertröpfchen beruht. Das System signalisiert dem Fahrer eine nicht sichtweitenangepaßte Fahrgeschwindigkeit.

Die deutsche Offenlegungsschrift DE 38 01 368 A1 offenbart ein Sichtweitenmeßgerät zur Sichtweitenermittlung durch Korrelation von Video-Kontrast-Daten mit Entfernungsdaten.

Aus der EP 0 691 534 A1 ist ein Verfahren zur Ermittlung der Sichtweite, insbesondere für die Bewegung eines Kraftfahrzeuges bekannt, bei dem die von einer optoelektronischen Aufnahmeeinrichtung aufgenommenen Originalbilder in Bildmerkmale transformiert werden. Über eine Entfernungsbestimmung der Bildmerkmale relativ zu der optoelektronischen Aufnahmeeinrichtung und einer anschließenden Filterung der Entfernungswerte wird die aktuelle Sichtweite ermittelt.

Es gibt bereits Systeme zur adaptiven Fahrgeschwindigkeits-und Abstandsregelung, die unter dem Begriff ACC-Systeme

(Adaptive Cruise Control) bekannt sind. Diese ACC-Systeme messen die Entfernung zwischen dem Fahrzeug und sich im Fahrzeugumfeld befindenden Objekten - in der Regel sind das andere Fahrzeuge - mittels Radar oder Laser (Lidar). Dabei wird mittels eines Radar- oder Laserstrahls das Blickfeld vor dem Fahrzeug abgetastet und aus den an Objekten reflektierten Strahlen die Relativentfernung und evt. auch die Relativgeschwindigkeit gegenüber dem eigenen Fahrzeug ermittelt. Die vom ACC-System gelieferte Information über die Relativentfernung bzw. Relativgeschwindigkeit wird auch ausgenutzt, um eine Fahrgeschwindigkeitsregelung durchzuführen. Die auf Radar oder Lidar basierenden ACC-Systeme sind in der Lage, auch bei Sichtbehinderung z.B. durch Nebel, Schnee oder Rauch Objekte im Blickfeld des Fahrzeugs zu detektieren und die Relativentfernung zu messen. Diese Fähigkeit kann dazu führen, daß ein Fahrer sich auf das ACC-System verläßt und selbst bei erheblicher Sichtbeschränkung mit sehr hoher Geschwindigkeit fährt. Ein technisches Fahrgeschwindigkeitsregelsystem, wie das ACC-System, ermöglicht aber im Vergleich zum Menschen eine nur sehr begrenzte Verkehrsszenenerfassung. Deshalb muß es möglich sein, daß bei bestimmten Verkehrssituationen, die das ACC-System nicht beherrschen kann, das ACC-System außer Kraft gesetzt wird und der Fahrer selbst die Fahrgeschwindigkeit regelt. Gerade in Situationen, in denen die Umgebung des Fahrzeugs nur eine sehr eingeschränkte Sichtweite zuläßt, darf die Abstands- und Fahrgeschwindigkeitsregelung dem ACC-System nicht mehr alleine überlassen werden, weil dann der Mensch eine Verkehrssituation, die das ACC-System nicht beherrscht, nicht rechtzeitig erkennen und in die Fahrgeschwindigkeitsregelung eingreifen könnte.

Der Erfindung liegt daher die Aufgabe zugrunde, ein Verfahren der eingangs genannten Art anzugeben, mit dem möglichst exakt die aktuelle Sichtweite im Blickfeld des Fahrzeugs bestimmt werden kann, so daß der Fahrer mit Hilfe der Sichtweiteninformation zu einer angepaßten Fahrweise veranlaßt werden kann.

### Vorteile der Erfindung

Die genannte Aufgabe wird entweder mit den Merkmalen des Anspruchs 1 oder mit den Merkmalen des Anspruchs 2 gelöst.

Gemäß dem Verfahren nach Anspruch 1 mißt ein monokularer Videosensor den Kontrast der vom Radar- oder Lidar-Sensor erfaßten Objekte, und es wird aus den vom Radar- oder Lidar-Sensor gemessenen Entfernungen von Objekten im Blickfeld des Fahrzeugs und aus dem vom monokularen Videosensor gemessenen Kontrast der betreffenden Objekte die Sichtweite bestimmt, wobei aus den gemessenen Entfernungen von verschiedenen Objekten, deren Kontrast einen minimalen für das menschliche Auge noch hinreichend erkennbaren wert entspricht, ein Mittelwert gebildet wird, der dann die Sichtweite angibt.

Ein zweites Verfahren gemäß Anspruch 2 besteht darin, daß ein binokularer Videosensor die Entfernung der Objekte und deren Kontrast mißt, und daß aus den Kontrast- und Entfernungemeßwerten die Sichtweite bestimmt wird, wobei aus den gemessenen Entfernungen von verschiedenen Objekten, deren Kontrast einen minimalen für das menschliche Auge noch hinreichend erkennbaren wert entspricht, ein Mittelwert gebildet wird, der dann die Sichtweite angibt. In beiden Verfahren wird sowohl eine Entfernungs- als auch eine Kontrastmessung durchgeführt, woraus sich sehr exakt die Sichtweite im Blickfeld vor dem Fahrzeug bestimmen läßt. Der Kontrast wird jeweils mittels einer passiven Videosensorik gemessen. Passiv bedeutet in diesem Fall, daß das auszumessende Blickfeld nicht mit einer eigenen Lichtquelle ausgeleuchtet wird, sondern daß nur das vom Blickfeld selbst ausgehende Licht von der Videosensorik aufgenommen wird.

Vorteilhafte Weiterbildungen der Erfindung gehen aus den Unteransprüchen hervor.

So kann zusätzlich zu der Entfernungsmessung durch den binokularen Videosensor eine Entfernungsmessung mit einem Radar- oder Lidar-Sensor durchgeführt werden. Vorteil dabei ist, daß nicht nur vom Radar- oder Lidar-Sensor erfaßbare Strukturen zur Sichtweitenbestimmung herangezogen werden können, sondern auch solche Strukturen, wie z.B. Fahrspurmarkierungen, die nur mit einem Videosensor erfaßbar sind. Im übrigen bietet der Einsatz eines Videosensors den Vorteil, daß er nicht nur zur Sichtweitenmessung verwendet werden kann, sondern auch zur Erfassung weiterer Fahrzeugumfeldinformationen (z.B. Fahrspurverlauf, Verkehrszeichen und dergleichen).

Es ist zweckmäßig, als Sichtweite die gemessene Entfernung eines Objekts anzunehmen, dessen gemessener Kontrast für das menschliche Auge noch hinreichend erkennbar ist. Der Videosensor sollte an den vom menschlichen Auge erkennbaren Wellenlängenbereich angepaßt sein.

Vorzugsweise wird die Kontrastmessung durch den Videosensor auf ein solches Objekt gerichtet, dessen Entfernung sich gegenüber dem Fahrzeug ändert. Die Kontrast- und die Entfernungsmessung werden dann iterativ durchgeführt. mehrfach durchgeführt und aus allen Messungen ein mittlerer Kontrastwert bestimmt wird.

Um bei der Kontrastmessung eine höhere Auflösung zu erzielen, ist es zweckmäßig, einen Videosensor zu verwenden, der eine nichtlineare Wandlerkennlinie aufweist, deren Kennliniensteilheit mit zunehmender Lichtstärke abnimmt.

Vorteilhafterweise wird eine abstandsregelnde Einrichtung des Fahrzeugs deaktiviert, wenn die ermittelte Sichtweite unter einen Mindestwert fällt.

Es kann auch die maximale Sollgeschwindigkeit des Fahrzeugs in Abhängigkeit von der ermittelten aktuellen Sichtweite gesteuert werden. Es ist zweckmäßig, dem Fahrer im Fahrzeug die aktuelle Sichtweite anzuzeigen, oder dem Fahrer zu signalisieren, daß die abstandsregelnde Einrichtung deaktiviert worden ist, oder dem Fahrer zu signalisieren, daß die von ihm vorgegebene maximale Sollgeschwindigkeit in Anpassung an die aktuelle Sichtweite verringert worden ist. All diese Informationen dienen dazu, den Fahrer bei einer eingeschränkten Sichtweite zu einer angepaßten Fahrweise zu veranlassen.

### Zeichnung

Anhand von in der Zeichnung dargestellten Ausführungsbeispielen wird nachfolgend die Erfindung näher erläutert. Es zeigen:
Figur 1 ein Blockschaltbild einer Einrichtung zur Sichtweitenbestimmung,
Figur 2 einen Sichtweitensensor mit einem monokularen Videosensor,
Figur 3 einen Sichtweitensnsor mit einem binokularen Videosensor und
Figur 4 eine Wandlerkennlinie einer Videokamera.

### Beschreibung von Ausführungsbeispielen

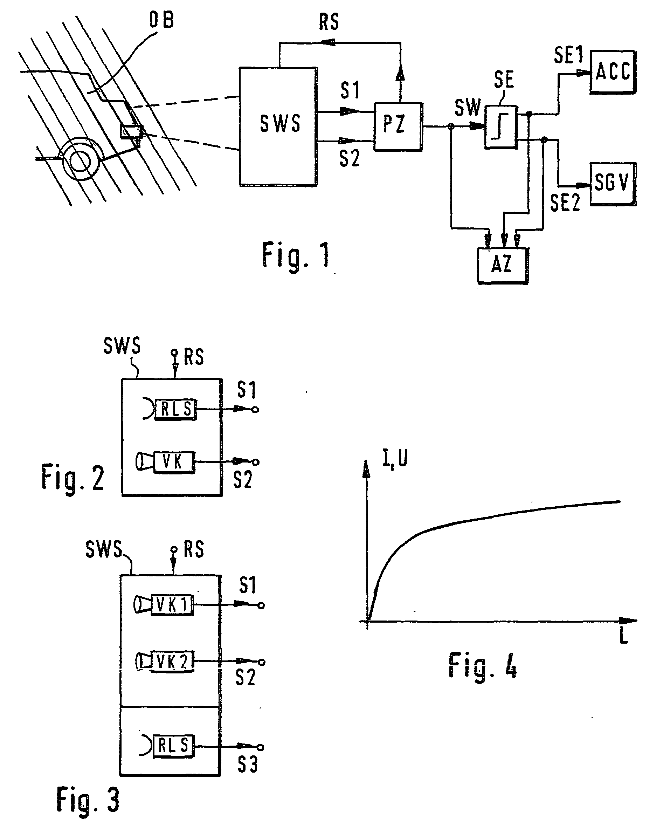

In der Figur 1 ist ein Blockschaltbild für eine Anordnung zum Bestimmen der Sichtweite in dem vor einem Fahrzeug liegenden Blickfeld dargestellt. In dem Blickfeld des Fahrzeugs ist ein Objekt OB angedeutet, das hier z.B. ein anderes Fahrzeug ist. Die Schraffur soll verdeutlichen, daß die Sichtweite im Blickfeld durch z.B. Nebel, Schnee oder Rauch beeinträchtigt ist.

Die Anordnung besitzt einen Sichtweitensensor SWS, der einerseits die Entfernung eines oder mehrerer Objekte OB mißt und andererseits mit einem passiven Videosensor den Kontrast dieses bzw. dieser Objekte OB mißt. Wird bei einem Objekt ein Kontrast gemessen, der einem minimalen für das menschliche Auge noch erkennbaren Wert entspricht, so wird die Entfernung dieses Objekts als die Sichtweite angenommen. Der Sichtweitensensor SWS gibt mehrere Signale S1, S2, welche Informationen über die gemessene Entfernung und den gemessenen Kontrast enthalten, an einen Prozessor PZ ab, der aus den Meßwerten die Sichtweite bestimmt.

In den Figuren 2 und 3 sind zwei verschiedene Systeme für einen Sichtweitensensor SWS dargestellt. Gemäß der Figur 2 besteht der Sichtweitensensor SWS aus einem Radar- oder Lidar-Sensor RLS, der eigentlich für ein Abstand regelndes und Geschwindigkeit regelndes ACC-System am Fahrzeug installiert ist, und einem monokularen Videosensor, einer an sich bekannten Videokamera. Die Videokamera VK sollte für einen optischen Wellenlängenbereich ausgelegt sein, der an den Wellenlängenbereich des menschlichen Auges angepaßt ist. Somit entsprechen die von der Videokamera VK gemessenen Kontrastwerte in etwa den vom menschlichen Auge erfassbaren Kontrastbereichen. Der Radar- oder Lidar-Sensor RLS mißt ungehindert einer Sichtweitenbeschränkung durch z.B. Nebel oder Schnee oder Rauch die Relativentfernung eines Objektes OB zum eigenen Fahrzeug. Von demselben Objekt nimmt die Videokamera VK ein Bild auf und erfaßt den Kontrast dieses Objektes gegenüber seiner Umgebung. Die Entfernungsmessung und die Kontrastmessung werden iterativ vorgenommen, so daß die Ausgangsdaten S1 und S2 des Sichtweitensensors SWS dem Prozessor PZ bei einer Abstandsveränderung zwischen dem Objekt OB und dem eigenen Fahrzeug eine entfernungsabhängige Kontrastinformation liefern. Der Prozessor PZ vergleicht die gemessenen Kontrastwerte mit einer Schwelle, die einen für das menschliche Auge noch hinreichend erkennbaren Kontrast darstellt. Diejenige gemessene Entfernung, welche mit einem gemessenen Kontrastwert korrespondiert, der mit der Schwelle zusammenfällt oder die Schwelle unterschreitet, wird als die im Blickfeld maximal mögliche Sichtweite SW angenommen.

Wie bereits gesagt, sollten, um die iterative Entfernungs-und Kontrastmessung durchführen zu können, sowohl der Radar-oder Lidar-Sensor RLS als auch die Videokamera VK auf ein Objekt gerichtet werden, dessen Relativgeschwindigkeit gegenüber dem eigenen Fahrzeug sich relativ rasch ändert. Vorzugsweise sind das am Fahrbahnrand feststehende Objekte, gegenüber denen das fortbewegende Fahrzeug seinen Abstand ändert.

Die Genauigkeit der Kontrastmessung läßt sich dadurch verbessern, daß jede Kontrastmessung mehrfach durchgeführt und aus allen Messungen ein mittlerer Kontrastwert bestimmt wird. Um die Genauigkeit der Sichtweitenmessung noch zu erhöhen, ist es zweckmäßig, Entfernungs- und Kontrastmessungen an verschiedenen Objekten im Blickfeld des Fahrzeugs durchzuführen. Aus den gemessenen Entfernungen der verschiedenen Objekte, deren Kontrast einem minimalen für das menschliche Auge noch hinreichend erkennbaren Wert entspricht, wird ein Mittelwert gebildet, der dann die Sichtweite SW angibt.

Sollen, wie zuvor erwähnt, die Entfernungen und Kontraste von mehreren verschiedenen Objekten gemessen werden, so ist es erforderlich, daß sowohl der Radar- oder Lidar-Sensor als auch der Videosensor gemeinsam auf das jeweils zu vermessende Objekt ausgerichtet werden. Dazu gibt der Prozessor PZ ein Richtungssteuerungssignal RS an die einzelnen Sensoren RLS und VK ab. Das Richtungssteuerungssignal RS bewirkt, daß die Videokamera VK ihre optische Achse auf denselben Ausschnitt im Blickfeld des Fahrzeugs ausrichtet wie der Radar- oder Lidar-Sensor RLS seine Strahlungsachse.

Die Figur 3 zeigt ein weiteres Beispiel für einen Sichtweitensensor SWS. Hier handelt es sich um einen binokularen Videosensor, der aus zwei in einem definierten Abstand zueinander angeordneten Videokameras VK1 und VK2 besteht. Mit einem solchen Stereo-Videokamerasystem VK1, VK2 lassen sich nach dem an sich bekannten Triangulationsverfahren aus dem Abstand zwischen den beiden Kameras VK1 und VK2 und dem Richtungswinkel deren optischer Achsen Entfernungen von Objekten ermitteln. Die Ausgangssignale S1 und S2 des binokularen Videosensors VK1, VK2 enthält also Informationen sowohl über Entfernungen als auch über Kontraste von ein oder mehreren Objekten im Blickfeld des Fahrzeugs. Der Prozessor PZ verarbeitet die gemessenen Entfernungen und Kontraste auf die gleiche Weise wie zuvor im Zusammenhang mit dem in Figur 2 dargestellten Sichweitensensor SWS beschrieben.

Zur Entfernungsmessung kann zusätzlich noch ein Radar-oder Lidar-Sensor RLS, der ein Entfernungsmeßsignal S3 an den Prozessor PZ liefert, eingesetzt werden. Durch die Verwendung von zwei verschiedenen Entfernungsmeßsystemen, einerseits VK1, VK2 und andererseits RLS, ist es möglich, Entfernungen von Objekten, die allein vom Radar- oder Lidar-Sensor RLS erfaßt werden können, und von solchen Objekten, wie z.B. Fahrspurmarkierungen, die nur der binokulare Videosensor VK1, VK2 erfassen kann, zu messen.

Die Videokameras VK, VK1, VK2 haben vorzugsweise einen den Zusammenhang zwischen der einfallenden Lichtstärke L und seinem elektrischen Ausgangssignal (Strom I oder Spannung U) beschreibende nichtlineare Wandlerkennlinie, deren Kennliniensteilheit mit zunehmender Lichtstärke abnimmt. Eine solche Wandlerkennlinie ist in der Figur 4 dargestellt. Eine Videokamera mit einer nichtlinearen Kennlinie ist in der Lage, auch bei einer hohen Helligkeitsdynamik die Szene mit hoher Auflösung aufzunehmen und damit eine sehr genaue Kontrastmessung durchzuführen.

Bei dem in der Figur 1 dargestellten Ausführungsbeispiel besitzt das Fahrzeug eine abstandsregelnde Einrichtung ACC. Außerdem ist eine Einrichtung SGV vorgesehen, mit dem vom Fahrer eine maximale Sollgeschwindigkeit vorgegeben werden kann. Unterschreitet nun die ermittelte Sichtweite SW einen Mindestwert, was durch eine Schwellwertentscheidung SE festgestellt wird, so gibt der Schwellwertentscheider SE ein Signal SE1 an die abstandsregelnde Einrichtung ACC ab und deaktiviert diese. Dann besteht nicht mehr die Gefahr, daß die abstandsregelnde Einrichtung ACC eine Fahrgeschwindigkeit einregelt, die nicht an die herrschenden Sichtbedingungen angepaßt ist. Durch die Deaktivierung dieser Einrichtung ACC liegt die Verantwortung für eine sichtweitenangepaßte Fahrgeschwindigkeit allein beim Fahrer.

Fällt die Sichtweite SW unter einen vom Schwellwertentscheider SE vorgegebenen Wert, so gibt dieser ein Steuersignal SE2 an die Einrichtung SGV zur Vorgabe einer maximalen Sollgeschwindigkeit ab. Mit dem Steuersignal SE2 wird die Sollgeschwindigkeitsvorgabe sichtweitenabhängig begrenzt. Je geringer die Sichtweite ist, desto geringer wird die maximale Sollgeschwindigkeit, die ein Fahrer vorgeben kann. Versucht der Fahrer eine Sollgeschwindigkeit einzustellen, die höher ist als die Sichtverhältnisse es erlauben, so wird diese Fahrgeschwindigkeitsvorgabe von der Einrichtung SGV nicht angenommen. Ansonsten wird die Sollgeschwindigkeit in Abhängigkeit von der Sichtweite nachgeführt. Je geringer die Sicht ist, auf einen desto geringeren Wert wird die Sollgeschwindigkeitsvorgabe herabgesetzt. Verbessert sich die Sicht, so wird die Sollgeschwindigkeitsvorgabe automatisch wieder erhöht bis sie die durch den Fahrer vorgegebene maximale Sollgeschwindigkeit erreicht hat.

Im Fahrzeug befindet sich auch eine Anzeige AZ, über die dem Fahrer die aktuelle Sichtweite SW angezeigt werden kann. Ebenso kann über diese Anzeige AZ dem Fahrer signalisiert werden, daß die abstandsregelnde Einrichtung ACC deaktiviert worden ist und/oder daß die von ihm vorgebene maximale Sollgeschwindigkeit in Anpassung an die aktuelle Sichtweite verringert worden ist.

## Patentansprüche

1. Verfahren zur Bestimmung der Sichtweite in dem vor einem Fahrzeug liegenden Blickfeld, wobei videotechnisch eine Kontrastmessung an sich im Blickfeld befindenden Objekten durchgeführt wird, **dadurch gekennzeichnet, daß** ein Radar-oder Lidar-Sensor (RLS) die Entfernung der Objekte (OB) mißt, daß ein monokularer Videosensor (VK) den Kontrast der vom Radar- oder Lidar-Sensor (RLS) erfaßten Objekte (OB) misst und daß aus den vom Radar- oder Lidar-Sensor (RLS) und vom monokularen Videosensor (VK) gelieferten Meßwerten (S1, S2) die Sichtweite (SW) bestimmt wird, wobei aus den gemessenen Entfernungen von verschiedenen Objekten (OB), deren Kontrast einem minimalen für das menschliche Auge noch hinreichend erkennbarem Wert entspricht, ein Mittelwert gebildet wird, der die Sichtweite (SW) angibt.

2. Verfahren zur Bestimmung der Sichtweite in dem vor einem Fahrzeug liegenden Blickfeld, wobei videotechnisch eine Kontrastmessung an sich im Blickfeld befindenden Objekten durchgeführt wird, **dadurch gekennzeichnet, daß** ein binokularer Videosensor (VK1, VK2) die Entfernung der Objekte (OB) und deren Kontrast mißt und daß aus den Kontrast- und Entfernungs-Meßwerten (S1, S2) die Sichtweite (SW) bestimmt wird, wobei aus den gemessenen Entfernungen von verschiedenen Objekten (OB), deren Kontrast einem minimalen für das menschliche Auge noch hinreichend erkennbarem Wert entspricht, ein Mittelwert gebildet wird, der die Sichtweite (SW) angibt.

3. Verfahren nach Anspruch 2, **dadurch gekennzeichnet, daß** zusätzlich zur Entfernungsmessung von Objekten (OB) ein Radar- oder Lidar-Sensor (RLS) vorgesehen ist.

4. Verfahren nach einem der vorhergehenden Ansprüche, **dadurch gekennzeichnet, daß** der Videosensor (VK, VK1, VK2) an den vom menschlichen Auge erkennbaren Wellenlängenbereich angepaßt ist.

5. Verfahren nach Anspruch 1 oder Anspruch 2, **dadurch gekennzeichnet, daß** sich die Kontrastmessung durch den Videosensor (VK, VK1, VK2) auf solche Objekte (OB) richtet, deren Entfernung sich gegenüber dem Fahrzeug ändert, und daß die Kontrastmessung und die Entfernungsmessung iterativ erfolgen.

6. Verfahren nach einem der vorhergehenden Ansprüche, **dadurch gekennzeichnet, daß** jede Kontrastmessung mehrfach durchgeführt und aus allen Messungen ein mittlerer Kontrastwert bestimmt wird.

7. Verfahren nach einem der vorhergehenden Ansprüche, **dadurch gekennzeichnet, daß** der Videosensor (VK, VK1, VK2) eine den Zusammenhang zwischen einfallender Lichtstärke und seinem elektrischen Ausgangssignal (I, U) beschreibende, nichtlineare Wandlerkennlinie aufweist, deren Kennliniensteilheit mit zunehmender Lichtstärke (L) abnimmt.

8. Verfahren nach Anspruch 1 oder Anspruch 2, **dadurch gekennzeichnet, daß** eine abstandsregelnde Einrichtung (ACC) des Fahrzeugs deaktiviert wird, wenn die ermittelte Sichtweite (SW) unter einen Mindestwert fällt.

9. Verfahren nach Anspruch 1 oder Anspruch 2, **dadurch gekennzeichnet, daß** eine vorgegebene maximale Sollgeschwindigkeit (SGV) in Abhängigkeit von der ermittelten aktuellen Sichtweite (SW) gesteuert wird.

10. Verfahren nach Anspruch 1 oder Anspruch 2, **dadurch gekennzeichnet, daß** dem Fahrer im Fahrzeug die aktuelle Sichtweite (SW) angezeigt (AZ) wird.

11. Verfahren nach Anspruch 8, **dadurch gekennzeichnet, daß** dem Fahrer im Fahrzeug signalisiert wird, daß die abstandsregelnde Einrichtung (ACC) deaktiviert worden ist.

12. Verfahren nach Anspruch 9, **dadurch gekennzeichnet, daß** dem Fahrer im Fahrzeug signalisiert wird, daß die von ihm vorgegebene maximale Sollgeschwindigkeit (SGV) in Anpassung an die aktuelle Sichtweite (SW) verringert worden ist.

## Claims

1. Method for determination of the visual range in the field of view in front of a vehicle, with a contrast measurement being carried out by video means on objects located in the field of view, **characterized in that** a radar or lidar sensor (RLS) measures the range of the objects (OB), **in that** a monocular video sensor (VK) measures the contrast of the objects (OB) detected by the radar or lidar sensor (RLS), and **in that** the visual range (SW) is determined from the measured values (S1, S2) produced by the radar or lidar sensor (RLS) and by the monocular video sensor (VK), with a mean value which indicates the visual range (SW) being formed from the measured ranges of different objects (OB) whose contrast corresponds to a minimum value which can still be adequately identified by the human eye.

2. Method for determination of the visual range in the field of view in front of a vehicle, with a contrast measurement being carried out by video means on objects located in the field of view, **characterized in that** a binocular video sensor (VK1, VK2) measures the range of the objects (OB) and their contrast, and **in that** the visual range (SW) is determined from the contrast and range measured values (S1, S2), with a mean value which indicates the visual range (SW) being formed from the measured ranges of different objects (OB) whose contrast corresponds to a minimum value which can still be adequately identified by the human eye.

3. Method according to Claim 2, **characterized in that** a radar or lidar sensor (RLS) is provided in addition to the range measurement of objects (OB).

4. Method according to one of the preceding claims, **characterized in that** the video sensor (VK, VK1, VK2) is matched to the wavelength range which can be perceived by the human eye.

5. Method according to Claim 1 or Claim 2, **characterized in that** the contrast measurement by means of the video sensor (VK, VK1, VK2) is aimed at those objects (OB) whose range is changing with respect to the vehicle, and **in that** the contrast measurement and the range measurement are carried out iteratively.

6. Method according to one of the preceding claims, **characterized in that** each contrast measurement is carried out more than once, and a mean contrast value is determined from all of the measurements.

7. Method according to one of the preceding claims, **characterized in that** the video sensor (VK, VK1, VK2) has a non-linear transducer characteristic which describes the relationship between the incident light intensity and its electrical output signal (I, U), and whose characteristic gradient decreases as the light intensity (L) increases.

8. Method according to Claim 1 or Claim 2, **characterized in that** a separation-controlling device (ACC) of the vehicle is deactivated when the determined visual range (SW) falls below a minimum value.

9. Method according to Claim 1 or Claim 2, **characterized in that** a predetermined maximum nominal speed (SGV) is controlled as a function of the determined current visual range (SW).

10. Method according to Claim 1 or Claim 2, **characterized in that** the current visual range (SW) is indicated (AZ) to the driver in the vehicle.

11. Method according to Claim 8, **characterized in that** the fact that the separation-controlling device (ACC) has been deactivated is signalled to the driver in the vehicle.

12. Method according to Claim 9, **characterized in that** the fact that the maximum nominal speed (SGV) predetermined by him has been reduced to match the current visual range (SW) is signalled to the driver in the vehicle.

## Revendications

1. Procédé de détermination de la visibilité dans le champ de vision à l'avant d'un véhicule, une mesure de contraste étant réalisée par la technique vidéo sur des objets se trouvant dans ce champ de vision,
**caractérisé en ce qu'**
un capteur radar ou un capteur lidar (RLS) mesure la distance des objets (OB),
un capteur vidéo monoculaire (VK) mesure le contraste des objets (OB) détectés par le capteur radar ou le capteur lidar (RLS), et la visibilité (SW) est déterminée à partir des valeurs mesurées (S1, S2) fournies par le capteur radar ou le capteur lidar (RLS) et le capteur vidéo monoculaire (VK),
une moyenne qui indique la visibilité (SW) étant formée à partir des distances mesurées des différents objets (OB) dont le contraste correspond à une valeur minimale encore suffisamment reconnaissable par l'oeil humain.

2. Procédé de détermination de la visibilité dans le champ de vision à l'avant d'un véhicule, une mesure de contraste étant réalisée par la technique vidéo sur des objets se trouvant dans le champ de vision,
**caractérisé en ce qu'**
un capteur vidéo binoculaire (VK1, VK2) mesure la distance des objets (OB) et leur contraste, et
la visibilité (SW) est déterminée à partir des valeurs mesurées (S1, S2) de contraste et de distance,
une moyenne qui indique la visibilité (SW) étant formée à partir des distances mesurées des différents objets (OB) dont le contraste correspond à une valeur minimale encore suffisamment reconnaissable par l'oeil humain.

3. Procédé selon la revendication 2,
**caractérisé par**
un capteur radar ou un capteur lidar (RLS) en plus de la mesure de la distance des objets (OB).

4. Procédé selon l'une quelconque des revendications précédentes,
**caractérisé en ce que**
le capteur vidéo (VK, VK1, VK2) est adapté à la zone de longueur d'onde reconnaissable par l'oeil humain.

5. Procédé selon la revendication 1 ou la revendication 2,
**caractérisé en ce que**
la mesure de contraste par le capteur vidéo (VK, VK1, VK2) se tourne vers les objets (OB) dont la distance se modifie par rapport au véhicule, et la mesure de contraste et la mesure de la distance sont effectuées de façon itérative.

6. Procédé selon l'une quelconque des revendications précédentes,
**caractérisé en ce que**
chaque mesure de contraste est réalisée plusieurs fois et une valeur de contraste moyenne est déterminée à partir de toutes les mesures.

7. Procédé selon l'une quelconque des revendications précédentes,
**caractérisé en ce que**
le capteur vidéo (VK, VK1, VK2) présente une ligne caractéristique de convertisseur non linéaire décrivant le lien entre une intensité lumineuse incidente et son signal de sortie électrique (I, U), dont la pente de la ligne caractéristique diminue lorsque l'intensité lumineuse incidente (L) s'accroît.

8. Procédé selon la revendication 1 ou la revendication 2,
**caractérisé en ce qu'**
un dispositif du véhicule régulant les espacements entre véhicules (ACC) est désactivé, si la visibilité (SW) détectée descend au-dessous d'une valeur minimum.

9. Procédé selon la revendication 1 ou la revendication 2,
**caractérisé en ce qu'**
une vitesse de consigne maximale attribuée (SGV) est commandée en fonction de la visibilité actuelle détectée (SW).

10. Procédé selon la revendication 1 ou la revendication 2,
**caractérisé en ce que**
la visibilité actuelle (SW) est indiquée (AZ) au conducteur du véhicule.

11. Procédé selon la revendication 8,
**caractérisé en ce qu'**
on signale au conducteur du véhicule que le dispositif régulant les espacements entre véhicules (ACC) a été désactivé.

12. Procédé selon la revendication 9,
**caractérisé en ce qu'**
on signale au conducteur du véhicule que la vitesse de consigne maximale (SGV) qu'il a fixée a été réduite lors de son adaptation à la visibilité actuelle (SW).
